# EUROPÄISCHE PATENTSCHRIFT

(11) **EP 2 674 364 B1**
(45) Veröffentlichungstag und Bekanntmachung des Hinweises auf die Patenterteilung: **27.05.2015**
(21) Anmeldenummer: 13002885.5
(22) Anmeldetag: 05.06.2013
(51) Int. Cl.: B65B 1/08, A61J 3/07, B65B 1/30, B65B 1/36, G01F 11/00, G01F 13/00

(54) **Kapillardosierer und Verfahren zum Betrieb eines solchen Kapillardosierers**
Capillary dosing device and method for operating the same
Dispositif de dosage capillaire et procédé de fonctionnement d'un tel dispositif de dosage capillaire

(30) Priorität: 15.06.2012 DE 102012011795
(43) Veröffentlichungstag der Anmeldung: 18.12.2013
(73) Patentinhaber: Harro Höfliger Verpackungsmaschinen GmbH, 71573 Allmersbach im Tal (DE)
(72) Erfinder: Weigel, Marco, 71554 Weissach im Tal (DE)
(74) Vertreter: Zurhorst, Stefan

(56) Entgegenhaltungen:
- EP-A1- 2 030 893
- DE-C1- 19 802 368
- GB-A- 2 472 817
- LU X ET AL: "Ultrasound-assisted microfeeding of fine powders", PARTICUOLOGY, ELSEVIER, AMSTERDAM, NL, Bd. 6, Nr. 1, 1. Februar 2008 (2008-02-01) , Seiten 2-8, XP022938299, ISSN: 1674-2001, DOI: 10.1016/J.CPART.2007.10.007 [gefunden am 2008-01-22]

## Beschreibung

Die Erfindung betrifft einen Kapillardosierer für ein Pulverprodukt der im Anspruch 1 angegebenen Gattung sowie ein Verfahren zur Dosierung eines Pulverproduktes mittels eines solchen Kapillardosierers.

Feinkörnige Pulverprodukte, insbesondere pulvrige Medikamente, Nahrungsergänzungsmittel oder dergleichen müssen exakt dosiert werden, um eine bestimmte, genau bemessene Verabreichungsdosis zu erreichen. Solche exakt bemessenen Dosiermengen werden beispielsweise in Hartgelatinekapseln eingefüllt oder zu Tabletten verpresst (siehe zum Beispiel GB 2472817 A).

Verbreitet werden für die Dosierung des Pulverprodukts sogenannte Kapillardosierer eingesetzt. Diese umfassen einen Vibrationskörper mit einer im Vibrationskörper ausgebildeten Kapillare zur Aufnahme und Förderung des Pulverproduktes. Die im Wesentlichen vertikal ausgerichtete Kapillare ist in ihrem Querschnitt derart bemessen und an die Materialeigenschaften des Pulverproduktes angepasst, dass das Pulver aufgrund seiner kohäsiven Eigenschaften nicht durch die ruhende Kapillare hindurch treten kann, sondern darin haften bleibt. Sofern aber der Vibrationskörper mit einer geeigneten Frequenz und Amplitude zum Schwingen angeregt wird, werden die Kohäsionskräfte überwunden. In dessen Folge bildet sich ein Pulverstrom des Pulverproduktes durch die im Vibrationskörper ausgebildete Kapillare hindurch aus, der in einem Zielbehälter geführt wird. Durch gezieltes Ein- und Ausschalten der Vibration des Vibrationskörpers kann der Pulverstrom ebenso gezielt ein- bzw. ausgeschaltet werden, um eine bestimmte Dosiermenge des Pulverproduktes im Zielbehälter zu erreichen. Damit diese Form der Dosierung praxistauglich funktioniert, ist eine genaue Anpassung des Kapillarquerschnittes an die Pulvereigenschaften, insbesondere an die Korngrößenverteilung, Kornform, Dichte und Zusammensetzung des zu dosierenden Pulvers erforderlich. Wird ein zu kleiner Querschnitt gewählt, kann sich auch bei einer Schwingungsanregung des Vibrationskörpers kein Pulverstrom ausbilden. Sofern aber ein zu großer Querschnitt gewählt wird, reichen die Kohäsionskräfte des Pulvers unter Umständen nicht aus, bei abgeschalteter Schwingungsanregung den Pulverstrom zu stoppen bzw. dessen Ausbildung zu unterbinden. Bei einer gelungenen Abstimmung sind derzeit nach dem Stand der Technik Durchflussraten von ca. 1 mg/s bis 10 mg/s erzielbar. Es besteht aber der Bedarf nach einem größeren erreichbaren Bereich von Durchflussraten.

Zur Bildung der genannten Kapillare werden nach dem Stand der Technik Röhrchen vergleichbar zur Kanüle einer Injektionsspritze eingesetzt. Die Röhrchen und die darin ausgebildeten Kapillaren haben einen kreisrunden Querschnitt, der die Haft- und Durchflusseigenschaften des Pulvers maßgeblich bestimmt. Klar definierte Haft- und Durchflusseigenschaften sind aber nur dann auffindbar, wenn auch das Pulver selbst eine homogene Ausbildung seiner Körner aufweist. Dies ist in der Praxis nicht immer gegeben. Einzelne größere Pulverkörner oder lokale Agglomeratbildungen können zu einem Verstopfen der Kapillare führen, was den laufenden Dosierbetrieb beeinträchtigt. Eine Reinigung bei Verstopfung oder bei einem Produktwechsel ist wegen des geringen Kapillarquerschnitts nur schwer möglich. Außerdem hat sich gezeigt, dass selbst bei der Wahl von hochqualitativen Röhrchen die Kapillarwände eine signifikante und ungleichmäßige Oberflächenrauheit aufweisen, was zu schwer vorhersehbaren Fließ- bzw. Halteeigenschaften führt. Eine glättende Oberflächenbearbeitung ist ebenso wie eine geeignete Oberflächenbeschichtung wegen des geringen Kapillarquerschnittes kaum zu realisieren, so dass unerwünschte Streuungen in den Halte- und Fließeigenschaften unvermeidlich sind.

Der Erfindung liegt die Aufgabe zugrunde, einen gattungsgemäßen Kapillardosierer derart weiterzubilden, dass eine präzisere Dosierung mit erhöhter Zuverlässigkeit möglich ist.

Diese Aufgabe wird durch einen Kapillardosierer mit den Merkmalen des Anspruchs 1 gelöst.

Der Erfindung liegt des Weiteren die Aufgabe zugrunde, ein Verfahren zur Dosierung eines Pulverproduktes mittels eines solchen Kapillardosierers anzugeben, mittels dessen die Dosiergenauigkeit und Zuverlässigkeit erhöht ist.

Diese Aufgabe wird durch ein Verfahren mit den Merkmalen des Anspruchs 11 gelöst.

Nach der Erfindung ist vorgesehen, dass der Vibrationskörper aus mindestens zwei aneinander angrenzenden Körperteilen gebildet ist, wobei die Kapillare als Kanal mit mindestens einer im demontierten Zustand offenen Seite in mindestens einem der Körperteile ausgebildet ist, wobei die offene Seite des Kanals im montierten Zustand durch das angrenzende Körperteil geschlossen ist. Durch die mehrteilige Bauweise wird zunächst erreicht, dass im demontierten Zustand der Körperteile der oder die Kanäle offen liegen, so dass von der offenen Seite aus die Kanalwand mit der gewünschten Glätte und Genauigkeit bearbeitet werden kann. Außerdem ist ohne weiteres bei Bedarf eine entsprechende Oberflächenbeschichtung möglich. Im montierten Zustand entsteht eine Kapillare mit klar definiertem Querschnitt und klar definierter Oberflächenbeschaffenheit, woraus eindeutige Hafteigenschaften bzw. eine eindeutige Selbsthaftung bei Stillstand des Vibrationskörpers und eindeutige Fließeigenschaften beim zum Schwingen angeregten Vibrationskörper folgen. Wenn in einem entsprechenden Betriebsverfahren der Vibrationskörper mit einer geeigneten Amplitude und einer geeigneten Frequenz in Schwingung versetzt wird, entsteht ein exakt definierter Pulverstrom zum Zielbehälter, der ebenso exakt unterbrochen werden kann, woraus eine präzise zuverlässige Dosierung folgt. Im Falle einer dennoch auftretenden Verstopfung oder auch bei einem Produktwechsel ist eine einfache Reinigung möglich. Dies beinhaltet auch die Möglichkeit der Inspektion und Sterilisation, wodurch auch aseptische Anwendungen möglich werden. Konstruktiv bestehen keine Beschränkungen bei der Materialauswahl, so dass für die Körperteile je nach Anforderung Metalle, Polymere und/oder Verbundwerkstoffe eingesetzt werden können. Insbesondere ist eine einfache Möglichkeit geschaffen, die Kanalgeometrie hinsichtlich Querschnitt und Verlauf an die Fließ- und Haftfähigkeit des Pulverprodukts anzupassen.

Durch entsprechende Bearbeitung besteht die Möglichkeit einer Kanalausgestaltung derart, dass eine Kapillare mit kreisrundem Querschnitt entsteht. Insbesondere ist aber die Möglichkeit eröffnet, dass der jeweilige Kanal und damit auch die im montierten Zustand entstehende Kapillare einen unrunden, insbesondere rechteckigen Querschnitt aufweist. Eine solche bevorzugte Ausführungsform basiert auf der Erkenntnis, dass das Fließ- und Haftverhalten des Pulverproduktes in der Kapillare neben den Pulvereigenschaften maßgeblich vom Verhältnis des Kapillarquerschnittes zum Kapillarumfang abhängt. Bei gleicher Querschnittsfläche weist eine Kapillare mit unrundem Querschnitt im Vergleich zu einem kreisrunden Querschnitt einen größeren Umfang und damit eine größere Kontaktfläche der Kapillarwand mit dem Pulverprodukt auf, was zu größeren Haftkräften führt. Es ist deshalb möglich, für ein bestimmtes Pulverprodukt eine größere Kanalquerschnittsfläche zu wählen, ohne die Selbsthaltung im Ruhezustand aufzugeben. Sofern aber der Vibrationskörper in Schwingung versetzt wird, führt der größere Kanalquerschnitt zu einer ebenso größeren Durchflussrate. Umgekehrt sind im Vergleich zum Stand der Technik auch niedrigere Durchflussraten erzielbar. Tatsächlich hat sich in der Praxis gezeigt, dass mit der erfindungsgemäßen Ausgestaltung Durchflussraten von 0,1 mg/s bis ca. 1g/s anstelle der 1-10 mg/s nach dem Stand der Technik erreicht werden können. Eine weitere Möglichkeit besteht darin, den Querschnitt der Kapillare an den Öffnungsquerschnitt des zu befüllenden Zielbehälters anzupassen, wobei dann auch bei komplexen, insbesondere länglichen Behältergeometrien eine gleichmäßige Befüllung möglich ist.

Es kann zweckmäßig sein, den Kanal oder die Kanäle in nur jeweils einem seitlichen Körperteil oder in beiden seitlichen Körperteilen auszubilden, wobei dann das jeweils gegenüberliegende Körperteil als Verschlusselement zur Bildung der Kapillare dient. In einer bevorzugten Weiterbildung sind mindestens drei geschichtet miteinander verbundene Körperteile vorgesehen, wobei der Kanal in einem mittleren Körperteil als Schlitz mit zwei offenen Seiten ausgebildet ist. Die beiden offenen Seiten sind im montierten Zustand durch die beiden äußeren angrenzenden Körperteile zur Bildung der Kapillare geschlossen. Der Schlitz ist mit einfachen Mitteln exakt herstellbar, wobei ohne weiteres auch nicht geradlinig verlaufende Kanalformen realisiert werden können. Im montierten Zustand entsteht eine hinsichtlich Oberflächengüte und Maßhaltigkeit des Querschnitts präzise Kapillare, die im ruhenden Zustand eine zuverlässige Haltewirkung und im schwingenden Zustand die zuverlässige Ausbildung eines Pulverstromes begünstigt. Das bevorzugt plattenförmige mittlere Körperteil kann leicht in seiner Dicke variiert werden, um eine gewünschte Querschnittsanpassung des darin ausgebildeten Kanals bzw. der daraus gebildeten Kapillare an die Eigenschaften des jeweils zu dosierenden Pulvers herbeizuführen. Auch besteht die Möglichkeit, das mittlere Körperteil durch zusätzliche Platten bzw. Bleche mit gleicher Kontur und Schlitzausbildung aufzudicken, um die genannte Querschnittsanpassung zu erzielen. Insgesamt kann das System damit leicht an verschiedene Fließ- und Halteeigenschaften des jeweils zu dosierenden Pulvers angepasst werden.

Es kann zweckmäßig sein, den mindestens einen Kanal und damit die im montierten Zustand entstehende Kapillare mit einem geradlinigen, insbesondere vertikalen Verlauf zu versehen. Bevorzugt weist der mindestens eine Kanal eine Bremsumlenkung auf. Hierdurch kann ein verbessertes Verhältnis von der Selbsthaltefähigkeit im ruhenden Zustand zur erzielbaren Durchflussrate im schwingenden Zustand herbeigeführt werden.

In einer vorteilhaften Ausführungsform sind mindestens zwei Kanäle parallel geschaltet. Dies ermöglicht beispielsweise das gleichzeitige Befüllen von mehreren Zielbehältern. Sofern die mehreren Kanäle in eine gemeinsame Mündung führen, kann auch ein einzelner Zielbehälter mit erhöhter Durchflussrate befüllt werden, ohne dass die Selbsthaltekräfte im Ruhezustand verglichen mit einem einzelnen Kanal herabgesetzt sind. In einem entsprechenden Betriebsverfahren können mit der genannten Anordnung auch zwei oder mehr verschiedene Pulver mittels je eines zugeordneten Kanals gleichzeitig oder sequenziell dosiert und dem gleichen Zielbehälter zugeführt werden. Die verschiedenen Kanäle können in Querschnitt und Verlauf mit oder ohne Bremsumlenkung individuell und unabhängig voneinander ausgestaltet und damit an die verschiedenen Fließ- und Halteeigenschaften der verschiedenen zu dosierenden Pulvers angepasst werden. Weiter eröffnet dies die Möglichkeit, in einem entsprechenden Verfahren mittels der zumindest zwei Kanäle zunächst eine Grobdosierung und anschließend eine Feindosierung des Pulverproduktes vorzunehmen. Insbesondere weisen hierzu die mindestens zwei Kanäle unterschiedlich große Querschnitte auf. Mit dem größeren der beiden Querschnitte und/oder mit beiden Kanälen zusammen wird zunächst eine Grobdosierung mit entsprechend großer Durchflussrate vorgenommen. Kurz vor Erreichen der Zielmenge wird einer der beiden Kanäle, insbesondere derjenige mit dem größeren Querschnitt, abgeschaltet, woraufhin dann die Feindosierung mittels des verbleibenden Kanals bei reduziertem Querschnitt und reduzierter Durchflussrate vorgenommen wird, bis die gewünschte Zielmenge erreicht ist.

Es kann vorteilhaft sein, dass die Unterbrechung des Pulverstroms zum Zielbehälter beim Erreichen der Zielmenge durch Abschaltung der Schwingung des Vibrationskörpers erfolgt. Bevorzugt mündet in den mindestens einen Kanal ein Unterdruckanschluss, wobei im Mündungsbereich des Unterdruckanschlusses ein das Pulverprodukt zurückhaltender Filter angeordnet ist. Die Unterbrechung des Pulverstroms zum Zielbehälter erfolgt beim Erreichen der Zielmenge durch Anlegen eines Unterdrucks am Unterdruckanschluss. Der Unterdruck bewirkt, dass das in der Kapillare befindliche Pulver an den Filter gesaugt wird und dort einen Pfropfen bildet, welcher den Pulverstrom unterbricht. Die Pfropfenbildung und damit die Unterbrechung des Pulverstroms erfolgt unmittelbar und ohne Zeitverzug, sodass eine zeitlich sehr genaue Abschaltung des Pulverstromes möglich ist. Die Unterdruckabschaltung kann ergänzend zur Abschaltung des Schwingungsantriebes vorgesehen werden, wobei der Pulverstrom bereits bei abgeschaltetem, aber noch ausschwingendem Schwingungsantrieb unterbrochen wird. Alternativ kann der Schwingungsantrieb des Vibrationskörpers kontinuierlich in Betrieb bleiben, wobei die Ausbildung bzw. Unterbrechung des Pulverstroms allein über das Anlegen bzw. Abschalten des Vakuums erfolgt. Insbesondere ist bei den vorgenannten parallel geschalteten Kanälen eine unabhängige Steuerung der Durchflussmenge in den einzelnen Kanälen bzw. Kapillaren unabhängig voneinander möglich.

In einer vorteilhaften Ausführungsform folgen im Kanal bezogen auf dessen Durchströmungsrichtung zwei Unterdruckanschlüsse aufeinander, wobei zwischen den beiden Unterdruckanschlüssen eine Dosierkammer ausgebildet ist. In einem entsprechenden Betriebsverfahren erfolgt eine Dosierung des Pulverproduktes durch wechselseitiges Anlegen eines Unterdrucks in einem der beiden Unterdruckanschlüsse. Die Dosierkammer weist ein präzise definiertes Volumen auf, wodurch eine exakte volumetrische Dosierung des Pulverproduktes auch ohne zusätzliche Maßnahmen wie Gewichts- und Zeitkontrolle möglich ist.

Bei besonders schwierig zu handhabenden, sehr kohäsiven Pulverprodukten können Maßnahmen zur Unterstützung der Fließfähigkeit im schwingenden Zustand erforderlich oder zweckmäßig sein. Bevorzugt ist hierzu im Kanal ein Schwingelement angeordnet, welches durch zusätzliche Agitation den Fließvorgang des Pulvers begünstigt. Das Schwingelement kann vergleichbar zu einem Rührer aktiv angetrieben sein und ist vorteilhaft als passives Schwingelement mit einer zur Schwingrichtung des Vibrationskörpers exzentrischen Erregermasse ausgeführt. Die exzentrische Erregermasse bewirkt eine passive Anregung des Schwingelementes infolge der Schwingbewegung des Vibrationskörpers, ohne dass hierzu ein eigener Antrieb erforderlich ist. Die Fließfähigkeit des Pulvers wird deutlich gesteigert.

Ausführungsbeispiele der Erfindung sind nachfolgend anhand der Zeichnung näher beschrieben. Es zeigen:
- Fig. 1: in einer schematischen Schnittdarstellung ein erstes Ausführungsbeispiel eines erfindungsgemäßen Kapillardosierers mit drei Körperteilen zur Bildung einer Kapillare;
- Fig. 2: in einer um 90° gedrehten Ansicht das mittlere Körperteil nach Fig. 1 mit einem darin ausgebildeten Schlitz zur Bildung der Kapillare im montierten Zustand;
- Fig. 3: eine Variante der Anordnung nach Fig. 1 mit in den beiden äußeren Körperteilen eingearbeiteten Kanälen zur Bildung der Kapillare;
- Fig. 4: eine weitere Variante des Kapillardosierers nach den Fig. 1 oder 3 mit einem Unterdruckanschluss zur Unterbrechung des Pulverstroms;
- Fig. 5: in einer Schnittdarstellung ein weiteres Ausführungsbeispiel eines Kapillardosierers mit zwei parallel geschalteten, jeweils mit einem Unterdruckanschluss versehenen Kanälen;
- Fig. 6: eine Variante der Ausführung nach Fig. 4 mit zwei in Reihe geschalteten Unterdruckanschlüssen und einer dazwischen ausgebildeten Dosierkammer;
- Fig. 7: eine Variante des mittleren Körperteils nach Fig. 2 mit einer durch ein angrenzendes Körperteil ausgebildeten Bremsumlenkung;
- Fig. 8: eine weitere Variante des mittleren Körperteils nach Fig. 2 oder 7 mit einem darin ausgebildeten passiven Schwingelement.

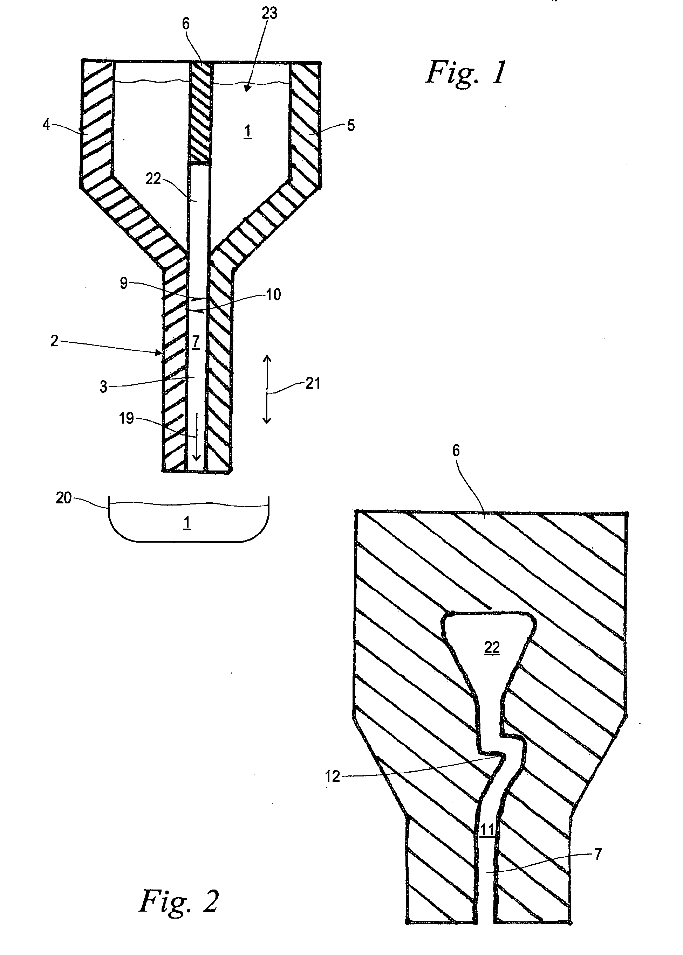

Fig. 1 zeigt in einer Querschnittsdarstellung ein erstes Ausführungsbeispiel des erfindungsgemäßen Kapillardosierers. Der Kapillardosierer umfasst einen schematisch dargestellten Vibrationskörper 2, in dem eine ebenfalls schematisch dargestellte Kapillare 3 ausgebildet ist. Die Kapillare 3 ist im Betrieb vertikal, also parallel zur Gewichtskraftrichtung ausgerichtet. Oberhalb der Kapillare 3 ist im Vibrationskörper 2 ein Zuführtrichter 23 ausgeformt, in dem ein Pulverprodukt 1, insbesondere in Form eines pulvrigen Medikamentes oder Nahrungsergänzungsmittels bevorratet ist und der Kapillare 3 zugeführt wird. Unterhalb des Kapillardosierers ist ein schematisch angedeuteter Zielbehälter 20 angeordnet, in den eine bestimmte Dosiermenge des Pulverproduktes 1 mittels des Kapillardosierers eingebracht wird.

Die Kapillare 3 dient zur Aufnahme und Förderung des Pulverproduktes 1 in den Zielbehälter 20. Hierzu ist sie in ihrer geometrischen Ausgestaltung derart an die Fließ- und Hafteigenschaften des Pulverprodukts 1 angepasst, dass im Ruhezustand des Vibrationskörpers 2 Selbsthaltung des innerhalb der Kapillare 3 befindlichen Pulverprodukts 1 infolge der wirkenden Kohäsionskräfte eintritt. Ausgehend vom genannten Ruhezustand kann der Vibrationskörper 2 mittels eines nicht dargestellten Schwingantriebs in einer durch einen Doppelpfeil angegebenen Schwingrichtung 21 in eine Schwingbewegung versetzt werden, wobei hier die Schwingrichtung 21 in Richtung der Längsachse der Kapillare 3 liegt. Es kann aber auch eine abweichende Schwingrichtung 21 zweckmäßig sein. Der Vibrationskörper 2 wird in einer solchen Amplitude und Frequenz in Schwingung versetzt, dass die vorgenannten Kohäsionskräfte überwunden werden, in dessen Folge sich ein Pulverstrom 19 des Pulverprodukts 1 in der Kapillare 3 unter Einwirkung der Gewichtskraft ausbildet. Der sich ausbildende Pulverstrom 19 führt eine Teilmenge des Pulverprodukts 1 aus dem Zufuhrtrichter 23 durch die Kapillare 3 hindurch in den Zielbehälter 20. Beim Erreichen einer Zielmenge des Pulverproduktes 1 im Zielbehälter 20 wird der Pulverstrom 19 zum Zielbehälter 20 unterbrochen. Dies kann durch Abschalten der vorgenannten Schwingbewegung und/oder durch eine weiter unten beschriebene Vakuumsteuerung oder auch andere geeignete Mittel herbeigeführt werden.

Der Vibrationskörper 2 ist aus mindestens zwei, hier drei geschichtet miteinander verbundenen, aneinander angrenzenden Körperteilen 4, 5, 6 gebildet. Im gezeigten Ausführungsbeispiel ist die Kapillare 3 als Kanal 7 mit mindestens einer im demontierten Zustand offenen Seite 9, 10 in mindestens einem der Körperteile 4, 5, 6, hier im mittleren Körperteil 6 ausgebildet, wobei die offene Seite 9, 10 des Kanals 7 im montierten Zustand durch das jeweils angrenzende Körperteil 4, 5, 6, hier durch die beiden äußeren Körperteile 4, 5 geschlossen ist.

Fig. 2 zeigt in einer um 90° gedrehten Schemadarstellung das mittlere Körperteil 6 nach Fig. 1. Dieses ist als ebenes, einteiliges Blech ausgeführt, wobei der Kanal 7 im mittleren Körperteil 6 als Schlitz 11 ausgeführt ist. Aus der Zusammenschau der Fig. 1 und 2 ergibt sich, dass der das plattenförmige Körperteil 6 vollständig durchgreifende Schlitz 11 und der daraus gebildete Kanal 7 beidseitig des mittleren Körperteils 6 je eine offene Seite 9, 10 aufweist. Im montierten Zustand nach Fig. 1 ist die eine offene Seite 9 durch das angrenzende Körperteil 5 und die gegenüberliegende offene Seite 10 durch das angrenzende Körperteil 4 abgedeckt. Der im demontierten Zustand nach Fig. 2 beidseitig offene, im montierten Zustand nach Fig. 1 aber einen ringsum geschlossenen Querschnitt aufweisende Kanal 7 bildet die Kapillare 3. Weiter ergibt sich aus der Zusammenschau der Fig. 1 und 2, dass der Schlitz 11 oberhalb des Kanals 7 zu einem Einlaufbereich 22 erweitert ist, der im montierten Zustand nach Fig. 1 innerhalb des Zufuhrtrichters 23 liegt. Der Einlaufbereich 22 erlaubt ein Nachfließen des Pulverproduktes 1 aus dem Zufuhrtrichter 23 in die Kapillare 3.

Der den Kanal 7 bildende Schlitz 11 kann geradlinig verlaufen. Im gezeigten Ausführungsbeispiel weist er optional einen nicht geradlinigen Verlauf unter Bildung einer Bremsumlenkung 12 auf, die die Selbsthaltung des Pulverprodukts 1 in der Kapillare 3 unterstützt. Aus dem Schlitz 11, der Ausbildung des mittleren Körperteils 6 als ebene Platte und der beidseitigen Abdeckung der beiden offenen Seiten 9, 10 folgt, dass der Kanal 7 und damit die Kapillare 3 einen unrunden, hier rechteckigen Querschnitt aufweist. Es können aber auch abweichende, beliebig andere Querschnittsformen einschließlich kreisrunder, elliptischer oder unregelmäßiger Querschnittsformen realisiert werden. Aus der Ausbildung des mittleren Körperteils 6 als ebene Platte bzw. als ebenes Blech folgt auch, dass der Querschnitt bzw. die freie Querschnittsfläche der Kapillare 3 neben der Kanal- bzw. Schlitzbreite auch durch die Dicke der Platte bzw. des Blechs definiert ist. Der Querschnitt der Kapillare 3 kann damit leicht durch Wahl einer bestimmten Dicke der Platte bzw. des Blechs variiert angepasst werden. Außerdem können zur Erzielung einer bestimmten Gesamtdicke mehrerer solcher Platten bzw. Bleche in Form des gezeigten mittleren Körperteils 6 für eine Querschnittsanpassung der Kapillare 3 geschichtet werden.

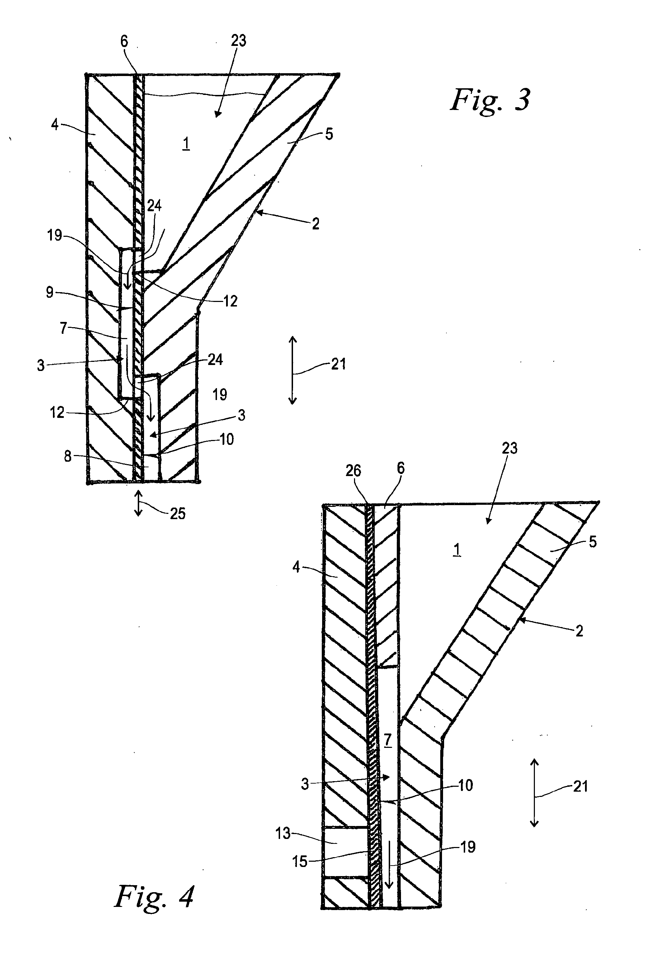

Fig. 3 zeigt in einer schematischen Querschnittsdarstellung eine Variante des Kapillardosierers nach Fig. 1. Hierbei ist der Zufuhrtrichter 23 nur im rechten Körperteil 5 ausgebildet, während das linke Körperteil 4 im Wesentlichen die Form einer ebenen Platte aufweist. Die Kapillare 3 ist durch insgesamt zwei Kanäle 7, 8 gebildet. Der erste Kanal 7 ist in die dem rechten Körperteil 5 zugewandte, ebene Oberfläche des linken Körperteils 4 eingearbeitet und weist im demontierten Zustand dem rechten Körperteil 5 zugewandt eine offene Seite 9 auf. Der zweite Kanal 8 ist in das rechte Körperteil 5 auf dessen dem linken Körperteil 4 zugewandten Oberfläche eingearbeitet und weist im demontierten Zustand eine dem linken Körperteil 4 zugewandte offene Seite 10 auf. Zwischen den beiden Körperteilen 4, 5 ist optional ein drittes Körperteil 6 angeordnet und verschließt im montierten Zustand die offenen Seiten 9, 10 der Kanäle 7, 8, wodurch ein geschlossener Querschnitt der Kapillare 3 entsteht. Es kann aber auch zweckmäßig sein, auf das mittlere Körperteil zu verzichten. In diesem Falle werden die offenen Seiten 9, 10 im montierten Zustand durch die angrenzenden Oberflächen der jeweils gegenüberliegenden Körperteile 5, 4 verschlossen.

Bezogen auf die Hochrichtung grenzt der erste Kanal 7 unten an den Zufuhrtrichter an, während der zweite Kanal 8 unten an den ersten Kanal 7 angrenzt. In beiden Angrenzungsbereichen ist das mittlere Körperteil 6 mit je einem Fenster 24 versehen, durch die im vibrierenden Betrieb der Pulverstrom 19 des Pulverproduktes 1 aus dem Zufuhrtrichter 23 in den ersten Kanal 7 und von dort in den zweiten Kanal 8 gelangen kann. Die beiden Fenster 24 bilden jeweils Bremsumlenkungen 12, die vergleichbar zur Bremsumlenkung 12 nach Fig. 2 die Selbsthaltung des Pulverproduktes 1 in der Kapillare 3 erhöhen.

In einer optionalen Ausführungsform kann das mittlere Körperteil 6 mit den beiden Fenstern 24 relativ zu den übrigen Körperteilen 4, 5 entsprechend einem Doppelpfeil 25 in der Höhe verschiebbar ausgeführt sein. Hierdurch können die Fenster 24 relativ zum Übergangsbereich zwischen dem Zufuhrtrichter 23 und dem ersten Kanal 7 sowie relativ zum Übergangsbereich vom ersten Kanal 7 zum zweiten Kanal 8 verschoben werden, wodurch der freie Durchtrittsquerschnitt der Fenster 24 und damit die im Schwingbetrieb sich ausbildende Durchflussrate des Pulverstroms 19 eingestellt werden kann. Dies beinhaltet auch die Möglichkeit einer mechanisch ausgeführten vollständigen Abschaltung des Pulverstroms 19, indem das mittlere Körperteil 6 mit seinen Fenster 24 soweit verschoben wird, dass die Fenster 24 durch die angrenzenden Körperteile 4, 5 verschlossen sind.

Fig. 4 zeigt in einer schematischen Querschnittsdarstellung eine weitere Variante des Kapillardosierers nach den Fig. 1 bis 3, wobei auch hier der Zufuhrtrichter 23 nur im rechten Körperteil 5 ausgebildet ist. Das dritte Körperteil 6 ist mit einem im demontierten Zustand beidseitig offenen Kanal 7 versehen und entspricht in seiner Ausgestaltung im Wesentlichen dem dritten Körperteil 6 nach Fig. 2, während die Körperteile 4, 5 abweichend vom Ausführungsbeispiel nach Fig. 3 keine Kanäle 7, 8 aufweisen. Das linke, erste Körperteil 4 ist als ebene Platte mit einem Unterdruckanschluss 13 ausgebildet, wobei der Unterdruckanschluss 13 in den Kanal 7 mündet. Zwischen dem ersten Körperteil 4 und dem dritten Körperteil 6 ist ein viertes Körperteil 26 in Form einer ebenen Platte angeordnet, die die ihr zugewandte offene Seite 10 des Kanals 7 verschließt, und die außerdem im Mündungsbereich des Unterdruckanschlusses einen das Pulverprodukt 1 zurückhaltenden Filter 15 trägt. Sofern für die Dosierung des Pulverproduktes 1 ein Pulverstrom 19 erzeugt werden soll, wird der Vibrationskörper 2 in der Schwingrichtung 21 zum Schwingen angeregt. Hierbei liegt am Unterdruckanschluss 13 kein Unterdruck an. Wie im Zusammenhang mit Fig. 1 beschrieben, bildet sich der Pulverstrom 19 aus. Beim Erreichen der dosierten Zielmenge des Pulverprodukts 1 im Zielbehälter 20 (Fig. 1) kann die Schwingbewegung des Vibrationskörpers 2 abgeschaltet werden. Mit der Abschaltung des Schwingantriebes hört die Schwingbewegung jedoch nicht sofort und unmittelbar auf. Vielmehr schwingt der Vibrationskörper 2 über einen kurzen Zeitraum aus, innerhalb dessen der Pulverstrom 19 teilweise noch bestehen bleibt. Um eine hieraus folgende Überdosierung zu vermeiden, wird der Unterdruckanschluss 13 beim Erreichen der genannten Zielmenge mit einer nicht dargestellten Unterdruck- bzw. Vakuumquelle verbunden, wodurch der am Unterdruckanschluss 13 anliegende Unterdruck durch den Filter 15 hindurch auch auf die Kapillare 3 einwirkt. Hierdurch wird das Pulverprodukt 1 in der Kapillare 3 an den Filter 15 angesaugt und dort vom Filter 15 zurückgehalten, so dass das Pulverprodukt 1 nicht in den Unterdruckanschluss 13 gelangen kann. In der Folge bildet sich am Filter 15 ein Pulverpfropfen aus, der den Pulverstrom 19 unmittelbar auch dann unterbricht, wenn der Vibrationskörper 2 noch ausschwingt oder gar im vollständig angetriebenen Schwingbetrieb ist. Letzteres ermöglicht ergänzend auch ein Verfahren zur Steuerung bzw. Unterbrechung des Pulverstroms 19 beim Erreichen der oben genannten Zielmenge auch dann, wenn der Vibrationskörper 2 dauerhaft bzw. kontinuierlich angetrieben ist.

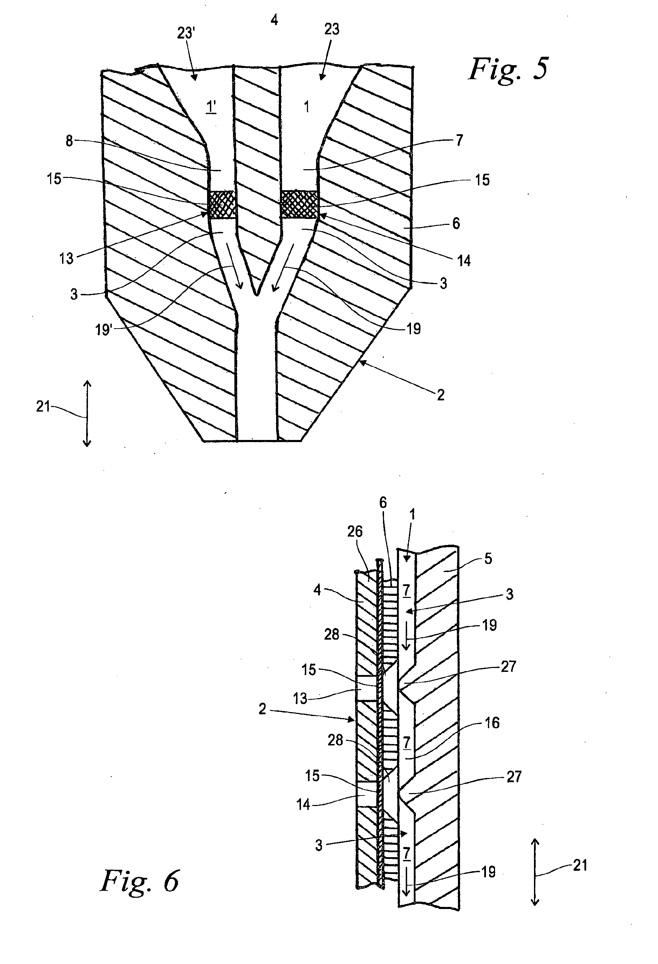

Fig. 5 zeigt in einer schematischen Längsschnittdarstellung ein weiteres Ausführungsbeispiel des Kapillardosierers mit einem Vibrationskörper 2, wobei im Vibrationskörper 2 mindestens zwei, hier genau zwei parallel geschaltete Kapillare 3 durch mindestens zwei, hier genau zwei parallel geschaltete Kanäle 7, 8 ausgebildet sind. Die beiden parallel geschalteten Kapillare 3 bzw. Kanäle 7, 8 können im unteren Austrittsbereich je eine eigene Mündungsöffnung aufweisen, wodurch das gleichzeitige Befüllen einer entsprechenden Anzahl von Zielbehältern 20 (Fig. 1) möglich ist. Im gezeigten Ausführungsbeispiel sind die Kanäle 7, 8 bzw. die durch sie gebildeten Kapillare 3 Y-förmig zu einer gemeinsamen unteren Mündung zusammengeführt.

Jeder der Kanäle 7, 8 ist mit je einem eigenen, unabhängig voneinander schaltbaren Unterdruckanschluss 13, 14 mit je einem Filter 15 versehen. Wie im Zusammenhang mit Fig. 4 beschrieben, können hierdurch die Pulverströme 19, 19' in den Kanälen 7, 8 unabhängig voneinander gesteuert werden.

Durch das Vorhandensein mehrerer Kapillare 3 bzw. Kanäle 7, 8 und deren unabhängige Steuerbarkeit können verschiedene erfindungsgemäße Verfahren ausgeführt werden. Zum Einen können in den beiden zugeordneten Zufuhrtrichtern 23, 23' unterschiedliche Pulverprodukte 1, 1' vorgehalten werden, so dass die unterschiedlichen Pulverprodukte 1, 1' je nach Ansteuerung der Unterdruckanschlüsse 13, 14 sequenziell oder auch gleichzeitig dosiert und mittels der gesteuerten Pulverströme 19, 19' in den Zielbehälter 20 (Fig. 1) eingefüllt werden können. In den Zufuhrtrichtern 23, 23' kann auch das gleiche Pulverprodukt 1 bevorratet sein, wobei anstelle mehrerer Zufuhrtrichter 23, 23' auch ein gemeinsamer Zufuhrtrichter 23 für das gleiche Pulverprodukt 1 für die verschiedenen Kapillare 3 bzw. Kanäle 7, 8 vorgesehen sein kann. Dies ermöglicht, dass mittels der mindestens zwei Kanäle 7, 8 zunächst eine Grobdosierung und anschließend eine Feindosierung des Pulverproduktes 1 erfolgt. Beispielsweise können zunächst beide Kanäle 7, 8 mittels der zugeordneten Unterdruckanschlüsse 13, 14 freigeschaltet werden, wobei sich beide Pulverströme 19, 19' zu einem Gesamtstrom mit einer entsprechend großen Durchflussrate addieren. Kurz vor Erreichen der dosierten Zielmenge wird dann einer der beiden Kanäle 7, 8 mittels des zugeordneten Unterdruckanschlusses 13, 14 mit Unterdruck beaufschlagt, so dass der jeweilige Pulverstrom 19, 19' im Zusammenhang mit Fig. 4 beschrieben unterbrochen wird. Der verbleibende, nicht abgeschaltete Pulverstrom 19' führt dann zu einer entsprechend verringerten Durchflussrate für die Feindosierung, bis dann schließlich die gewünschte Zielmenge des Pulverproduktes 1 im Zielbehälter 20 (Fig. 1) mit der erforderlichen Genauigkeit erreicht ist. Ergänzend kann es entsprechend der Darstellung nach Fig. 5 vorteilhaft sein, dass die mindestens zwei Kanäle 7, 8 unterschiedlich große Querschnitte aufweisen. Im Ausführungsbeispiel nach Fig. 5 weist der Kanal 7 einen größeren Querschnitt auf als der Kanal 8. Der im Querschnitt kleinere Kanal 8 erlaubt eine noch genauere Feindosierung entsprechend dem oben beschriebenen Verfahren. Außerdem kann es zweckmäßig sein, die vorstehend beschriebene Grobdosierung allein mit dem im Querschnitt größeren Kanal 7 vorzunehmen.

Fig. 6 zeigt in einer Längsschnittdarstellung ein weiteres Ausführungsbeispiel des Kapillardosierers als Ausschnitt seines Schwingkörpers 2. Der Kanal 7 ist zur Bildung der Kapillare 3 beispielhaft im rechten Körperteil 5 ausgebildet, während die weiteren Körperteile 4, 6, 26 als ebene Platte ausgebildet sind. Abweichend vom Ausführungsbeispiel nach Fig. 4 folgen im Kanal 7 bezogen auf dessen Durchströmungsrichtung entsprechend dem Pulverstrom 19 zwei Unterdruckanschlüsse 13, 14 aufeinander, wobei die Unterdruckanschlüsse 13, 14 im linken Körperteil 4 ausgebildet sind und mittels zugeordneter, im Körperteil 26 gehaltener Filter 15 höhenversetzt in den Kanal 7 münden. Zwischen den beiden Unterdruckanschlüssen 13, 14 bildet der Kanal 7 eine Dosierkammer 16 aus, deren Dosiervolumen durch den Abstand der beiden Unterdruckanschlüsse 13, 14 voneinander und den Querschnitt des Kanals 7 exakt bestimmt ist.

In einem zugehörigen erfindungsgemäßen Betriebsverfahren kann hierdurch eine volumetrische Dosierung vorgenommen werden. Hierzu erfolgt die Dosierung des Pulverproduktes 1 durch wechselseitiges Anlegen eines Unterdrucks an einem der beiden Unterdruckanschlüsse 13, 14. Der Vibrationskörper 2 ist bevorzugt kontinuierlich in der Schwingrichtung 21 schwingend angetrieben, wobei zunächst Unterdruck am unteren Unterdruckanschluss 14 anliegt. Oberhalb davon bildet sich der Pulverstrom 19 solange aus, bis die Dosierkammer 16 mit dem Pulverprodukt 1 befüllt ist. Anschließend wird der obere Unterdruckanschluss 13 mit Unterdruck beaufschlagt, so dass sich in vorstehend beschriebener Weise ein Pulverpfropfen ausbildet, der ein weiteres Nachfließen des Pulverproduktes in die Dosierkammer 16 verhindert. Gleichzeitig mit dem Anlegen des Unterdrucks am oberen Unterdruckanschluss 13 oder auch später wird der Unterdruck am unteren Unterdruckanschluss abgeschaltet, in dessen Folge das in der Dosierkammer 16 volumetrisch dosierte Pulverprodukt 1 nach unten entsprechend dem Pulverstrom 19 in den Zielbehälter 20 (Fig. 1) abfließt. Nachdem dies geschehen ist, wird erneut Unterdruck am unteren Unterdruckanschluss 14 angelegt, während gleichzeitig oder später der Unterdruck am oberen Unterdruckanschluss 13 abgeschaltet wird, so dass erneut das Pulverprodukt 1 in die Dosierkammer 16 bis zu dessen vollständiger Befüllung nachfließen kann. Hiervon ausgehend kann eine erneute volumetrische Dosierung in vorstehend beschriebener Weise erfolgen.

Im Ausführungsbeispiel nach Fig. 6 kann es zweckmäßig sein, dass der Kanal 7 geradlinig durchgehend ausgestaltet ist. In der gezeigten optionalen Ausführungsform weist das rechte Körperteil 5 im Bereich der Unterdruckanschlüsse 13, 14 in den Kanal 7 hervorstehende Vorsprünge 27 auf, wozu entsprechende Vertiefungen 28 im angrenzenden Körperteil 6 korrespondieren. Im Grund der Vertiefungen 28 sind die Filter 15 angeordnet. Das Zusammenspiel der Vorsprünge 27 mit den Vertiefungen 28 begünstigt die den Pulverstrom 19 steuernde bzw. unterbrechende Pfropfenbildung an den Filtern 15 und damit die Exaktheit der volumetrischen Dosierung in der Dosierkammer 16.

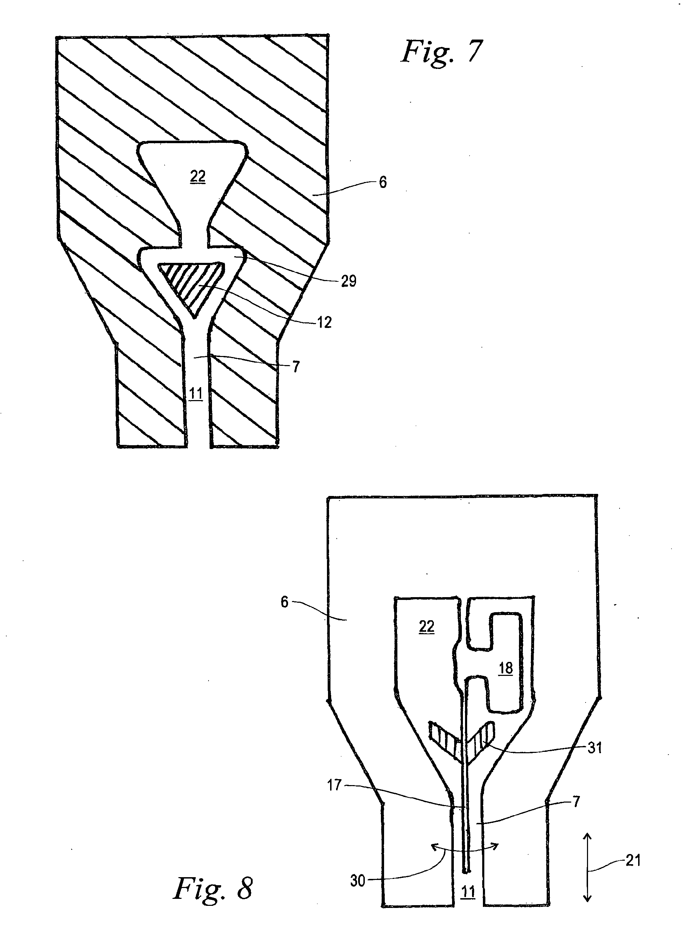

Fig. 7 zeigt in einer schematischen Darstellung eine Variante des Körperteils 6 nach Fig. 2. Im Unterschied zur Ausführung nach Fig. 2 weist der Schlitz 11 im Bereich des durch ihn gebildeten Kanals 7 eine Erweiterung 29 auf, in die im montierten Zustand eine Bremsumlenkung 12 eines der angrenzenden Körperteile 4, 5 (Fig. 1) eingreift. Es ist also nicht erforderlich, dass die Bremsumlenkung 12 entsprechend der Darstellung nach Fig. 2 an demjenigen Bauteil ausgebildet ist, in welchem auch der entsprechende Kanal 7 eingearbeitet ist. Vielmehr kann die Bremsumlenkung 12 entsprechend der Darstellung nach Fig. 7 auch durch ein separates Bauteil gebildet sein.

Schließlich ist in Fig. 8 noch eine weitere Variante des Körperteils 6 nach den Fig. 2 und 7 dargestellt. Hierbei ist in dem durch den Schlitz 11 gebildeten Kanal 7 ein Schwingelement 17 angeordnet, mittels dessen die Ausbildung eines Pulverstroms 19 im Kanal 7 (Fig. 1) auch bei hochkohäsiven Pulvern begünstigt wird. Das Schwingelement 17 kann ein aktiv, eigenständig angetriebenes Schwingelement sein und ist im gezeigten Ausführungsbeispiel ein passives Schwingelement, welches durch die Schwingbewegung des Vibrationskörpers 2 (Fig. 1) in der Schwingrichtung 21 zur Schwingung angeregt wird. Hierzu ist das Schwingelement 17 im oberen Abschnitt des Einlaufbereichs 22 fest, hier einteilig mit dem Körperteil 6 verbunden. Außerdem weist das Schwingelement 17 eine im Einlaufbereich 22 liegende Erregermasse 18 auf, die bezogen auf die Längsachse des Schwingelementes 17 und die Schwingrichtung 21 seitlich bzw. exzentrisch liegt. Durch die genannte Exzentrizität wird die Schwingbewegung des Vibrationskörpers 2 (Fig. 1) in der Schwingrichtung 21 in eine Schwingungsanregung des Schwingelementes 17 quer dazu entsprechend einem Doppelpfeil 30 umgesetzt. Optional kann das Schwingelement 17 auch Rührflügel 31 aufweisen, die die Agitationswirkung des Schwingelementes 17 auf das Pulverprodukt 1 begünstigen.

Sofern nicht anders angegeben, stimmen die gezeigten Ausführungsbeispiele in ihren übrigen Merkmalen und Bezugszeichen untereinander überein. Außerdem können die Merkmale jedes der Ausführungsbeispiele mit Merkmalen der anderen Ausführungsbeispiele kombiniert werden.

## Patentansprüche

1. Kapillardosierer für ein Pulverprodukt (1), umfassend einen Vibrationskörper (2) mit einer im Vibrationskörper (2) ausgebildeten Kapillare (3) zur Aufnahme und Förderung des Pulverproduktes (1),
**dadurch gekennzeichnet, dass** der Vibrationskörper (2) aus mindestens zwei aneinander angrenzenden Körperteilen (4, 5, 6) gebildet ist, wobei die Kapillare (3) als Kanal (7, 8) mit mindestens einer im demontierten Zustand offenen Seite (9, 10) in mindestens einem der Körperteile (4, 5, 6) ausgebildet ist, wobei die offene Seite (9, 10) des Kanals (7, 8) im montierten Zustand durch das angrenzende Körperteil (4, 5, 6) geschlossen ist.

2. Kapillardosierer nach Anspruch 1,
**dadurch gekennzeichnet, dass** der Kanal (7, 8) einen unrunden, insbesondere rechteckigen Querschnitt aufweist.

3. Kapillardosierer nach Anspruch 2,
**dadurch gekennzeichnet, dass** drei geschichtet miteinander verbundene Körperteile (4, 5, 6) vorgesehen sind, wobei der Kanal (7) im mittleren Körperteil (6) als Schlitz (11) mit zwei offenen Seiten (9, 10) ausgebildet ist.

4. Kapillardosierer nach einem der Ansprüche 1 bis 3,
**dadurch gekennzeichnet, dass** der Kanal (7, 8) eine Bremsumlenkung (12) aufweist.

5. Kapillardosierer nach einem der Ansprüche 1 bis 4,
**dadurch gekennzeichnet, dass** mindestens zwei Kanäle (7, 8) parallel geschaltet sind.

6. Kapillardosierer nach Anspruch 5,
**dadurch gekennzeichnet, dass** die mindestens zwei Kanäle (7, 8) unterschiedlich große Querschnitte aufweisen.

7. Kapillardosierer nach einem der Ansprüche 1 bis 6,
**dadurch gekennzeichnet, dass** in den Kanal (7, 8) ein Unterdruckanschluss (13, 14) mündet, wobei im Mündungsbereich des Unterdruckanschlusses (13) ein das Pulverprodukt (1) zurückhaltender Filter (15) angeordnet ist.

8. Kapillardosierer nach Anspruch 7,
**dadurch gekennzeichnet, dass** im Kanal (7) bezogen auf dessen Durchströmungsrichtung zwei Unterdruckanschlüsse (13, 14) aufeinander folgen, wobei zwischen den beiden Unterdruckanschlüssen (13, 14) eine Dosierkammer (16) ausgebildet ist.

9. Kapillardosierer nach einem der Ansprüche 1 bis 8,
**dadurch gekennzeichnet, dass** im Kanal (7) ein Schwingelement (17) angeordnet ist.

10. Kapillardosierer nach Anspruch 9,
**dadurch gekennzeichnet, dass** das Schwingelement (17) ein passives Schwingelement mit einer zur Schwingrichtung (21) des Vibrationskörpers (2) exzentrischen Erregermasse (18) ist.

11. Verfahren zur Dosierung eines Pulverproduktes (1) mittels eines Kapillardosierers nach einem der Ansprüche 1 bis 10,
**dadurch gekennzeichnet, dass** der Vibrationskörper (2) mit einer solchen Amplitude und Frequenz in Schwingung versetzt wird, dass ein Pulverstrom (19) des Pulverproduktes (1) durch die im Vibrationskörper (2) ausgebildete Kapillare (3) hindurch in einen Zielbehälter (20) gelangt, und dass beim Erreichen einer Zielmenge des Pulverproduktes (1) im Zielbehälter (20) der Pulverstrom (19) zum Zielbehälter (20) unterbrochen wird.

12. Verfahren nach Anspruch 11,
**dadurch gekennzeichnet, dass** die Unterbrechung des Pulverstroms (19) zum Zielbehälter (20) beim Erreichen der Zielmenge durch Abschaltung der Schwingung des Vibrationskörpers (2) erfolgt.

13. Verfahren nach Anspruch 11 oder 12,
**dadurch gekennzeichnet, dass** in den Kanal (7, 8) ein Unterdruckanschluss (13, 14) mündet, wobei im Mündungsbereich des Unterdruckanschlusses (13) ein das Pulverprodukt (1) zurückhaltender Filter (15) angeordnet ist, und dass die Unterbrechung des Pulverstroms (19) zum Zielbehälter (20) beim Erreichen der Zielmenge durch Anlegen eines Unterdrucks am Unterdruckanschluss (13) erfolgt.

14. Verfahren nach einem der Ansprüche 11 bis 13,
**dadurch gekennzeichnet, dass** mindestens zwei Kanäle (7, 8) parallel geschaltet sind, und dass mittels der mindestens zwei Kanäle (7, 8) unterschiedliche Pulverprodukte (1, 1') dosiert werden.

15. Verfahren nach Anspruch 13,
**dadurch gekennzeichnet, dass** mindestens zwei Kanäle (7, 8) parallel geschaltet sind, wobei insbesondere die mindestens zwei Kanäle (7, 8) unterschiedlich große Querschnitte aufweisen, und dass mittels der mindestens zwei Kanäle (7, 8) zunächst eine Grobdosierung und anschließend eine Feindosierung des Pulverproduktes (1) erfolgt.

16. Verfahren nach Anspruch 13,
**dadurch gekennzeichnet**, das im Kanal (7) bezogen auf dessen Durchströmungsrichtung zwei Unterdruckanschlüsse (13, 14) aufeinander folgen, wobei zwischen den beiden Unterdruckanschlüssen (13, 14) eine Dosierkammer (16) ausgebildet ist, und dass eine Dosierung des Pulverproduktes (1) durch wechselseitiges Anlegen eines Unterdrucks an einen der beiden Unterdruckanschlüsse (13, 14) erfolgt.

## Claims

1. Capillary dosing device for a powder product (1), comprising a vibration body (2) with a capillary (3) formed in the vibration body (2) to receive and convey the powder product (1),
**characterised in that** the vibration body (2) is formed from at least two body parts (4, 5, 6) adjacent to each other, wherein the capillary (3) is formed as a channel (7, 8) with at least one side (9, 10) open in the disassembled state in at least one of the body parts (4, 5, 6), wherein the open side (9, 10) of the channel (7, 8) is closed in the assembled state by the adjacent body part (4, 5, 6).

2. Capillary dosing device according to claim 1,
**characterised in that** the channel (7, 8) has a non-round, in particular rectangular cross-section.

3. Capillary dosing device according to claim 2,
**characterised in that** three body parts (4, 5, 6) interconnected with each other in a layered manner are provided, wherein the channel (7) is formed in the middle body part (6) as a slot (11) with two open sides (9, 10).

4. Capillary dosing device according to one of claims 1 to 3,
**characterised in that** the channel (7, 8) has a deflection brake element (12).

5. Capillary dosing device according to one of claims 1 to 4,
**characterised in that** at least two channels (7, 8) are arranged in parallel.

6. Capillary dosing device according to claim 5,
**characterised in that** the at least two channels (7, 8) have different sized cross-sections.

7. Capillary dosing device according to one of claims 1 to 6,
**characterised in that** a vacuum port (13, 14) opens into the channel (7, 8), wherein a filter (15) retaining the powder product (1) is arranged in the area where the vacuum port (13) opens into the channel (7, 8).

8. Capillary dosing device according to claim 7,
**characterised in that** two vacuum ports (13, 14) follow in succession in the channel (7) with respect to the through-flow direction thereof, wherein a dosing chamber (16) is formed between the two vacuum ports (13, 14).

9. Capillary dosing device according to one of claims 1 to 8,
**characterised in that** an oscillating element (17) is arranged in the channel (7).

10. Capillary dosing device according to claim 9,
**characterised in that** the oscillating element (17) is a passive oscillating element with a mass exciter (18) that is eccentric with respect to the oscillating direction (21) of the vibration body (2).

11. Method for dosing a powder product (1) by means of a capillary dosing device according to one of claims 1 to 10,
**characterised in that** the vibration body (2) is set in oscillation with such an amplitude and frequency that a powder flow (19) of the powder product (1) passes through the capillary (3) formed in the vibration body (2) into a target container (20) and that the powder flow (19) to the target container (20) is interrupted when the target amount of the powder product (1) reaches the target container (20).

12. Method according to claim 11,
**characterised in that** the interruption of the powder flow (19) to the target container (20) is realised upon reaching the target quantity by disconnecting the oscillation of the vibration body (2).

13. Method according to claim 11 or 12,
**characterised in that** a vacuum port (13, 14) opens into the channel (7, 8) wherein a filter (15) retaining the powder product (1) is arranged in the area where the vacuum port (13) opens into the channel (7, 8), and the interruption of the powder flow (19) to the target container (20) upon reaching the target quantity is realised by providing a vacuum at the vacuum port (13).

14. Method according to one of claims 11 to 13,
**characterised in that** at least two channels (7, 8) are arranged in parallel, and that different powder products (1, 1') are dosed by means of the at least two channels (7, 8).

15. Method according to claim 13,
**characterised in that** at least two channels (7, 8) are arranged in parallel, wherein in particular the at least two channels (7, 8) have different sized cross-sections, and initially an approximate dosing and subsequently a fine dosing of the powder product (1) are realised by means of the at least two channels (7, 8).

16. Method according to claim 13,
**characterised in that** two vacuum ports (13, 14) follow in succession in the channel (7) with respect to the through-flow direction thereof, wherein a dosing chamber (16) is formed between the two vacuum ports (13, 14) and a dosing of the powder product (1) is realised through alternating provision of a vacuum at one of the two vacuum ports (13, 14).

## Revendications

1. Doseur capillaire pour un produit en poudre (1), comprenant un corps vibrant (2) avec un capillaire (3), dans celui-ci, pour recevoir et acheminer le produit en poudre (1),
**caractérisé en ce que** le corps vibrant (2) est formé à partir d'au moins deux parties de corps adjacentes (4, 5, 6), étant précisé que le capillaire (3) est conçu comme un conduit (7, 8) avec au moins un côté (9, 10) ouvert, à l'état démonté, dans l'une au moins des parties de corps (4, 5, 6), le côté ouvert (9, 10) du conduit (7, 8) étant fermé, à l'état monté, par la partie de corps (4, 5, 6) adjacente.

2. Doseur capillaire selon la revendication 1,
**caractérisé en ce que** le conduit (7, 8) présente une section non circulaire, en particulier rectangulaire.

3. Doseur capillaire selon la revendication 2,
**caractérisé en ce qu'**il est prévu trois parties de corps (4, 5, 6) reliées en couches, étant précisé que le conduit (7) dans la partie de corps du milieu (6) est conçu comme une fente (11) avec deux côtés ouverts (9, 10).

4. Doseur capillaire selon l'une des revendications 1 à 3,
**caractérisé en ce que** le conduit (7, 8) présente une déviation de freinage (12).

5. Doseur capillaire selon l'une des revendications 1 à 4,
**caractérisé en ce qu'**au moins deux conduits (7, 8) sont prévus parallèlement.

6. Doseur capillaire selon la revendication 5,
**caractérisé en ce que** les deux conduits (7, 8), ou plus, présentent des sections transversales de tailles différentes.

7. Doseur capillaire selon l'une des revendications 1 à 6,
**caractérisé en ce qu'**un raccord à dépression (13, 14) débouche dans le conduit (7, 8), étant précisé qu'un filtre (15) qui retient le produit en poudre (1) est disposé dans la zone où débouche ledit raccord à dépression (13).

8. Doseur capillaire selon la revendication 7,
**caractérisé en ce que** deux raccords à dépression (13, 14) se succèdent dans le conduit (7), dans le sens d'écoulement dans celui-ci, étant précisé qu'une chambre de dosage (16) est formée entre les deux raccords à dépression (13, 14).

9. Doseur capillaire selon l'une des revendications 1 à 8,
**caractérisé en ce qu'**un élément oscillant (17) est disposé dans le conduit (7).

10. Doseur capillaire selon la revendication 9,
**caractérisé en ce que** l'élément oscillant (17) est un élément oscillant passif avec une masse excitatrice (18) excentrique par rapport au sens d'oscillation (21) du corps vibrant (2).

11. Procédé pour doser un produit en poudre (1) à l'aide d'un doseur capillaire selon l'une des revendications 1 à 10,
**caractérisé en ce que** l'on fait vibrer le corps vibrant (2) avec une amplitude et une fréquence telles qu'un écoulement (19) du produit en poudre (1) arrive dans un récipient de destination (20) par le capillaire (3) formé dans le corps vibrant (2), et **en ce que** lorsqu'une quantité visée du produit en poudre (1) dans le récipient de destination (20) est atteinte, l'écoulement de poudre (19) vers ledit récipient (20) est interrompu.

12. Procédé selon la revendication 11,
**caractérisé en ce que** l'interruption de l'écoulement de produit (19) vers le récipient de destination (20) lorsque la quantité visée est atteinte se fait grâce à l'arrêt de l'oscillation du corps vibrant (2).

13. Procédé selon la revendication 11 ou 12,
**caractérisé en ce qu'**un raccord à dépression (13, 14) débouche dans le conduit (7, 8), étant précisé qu'un filtre (15) qui retient le produit en poudre (1) est disposé dans la zone où débouche ledit raccord à dépression (13), et **en ce que** l'interruption de l'écoulement de produit (19) vers le récipient de destination (20) lorsque la quantité visée est atteinte se fait grâce à l'application d'une dépression au raccord à dépression (13).

14. Procédé selon l'une des revendications 11 à 13,
**caractérisé en ce qu'**au moins deux conduits (7, 8) sont prévus parallèlement et **en ce que** des produits en poudre (1, 1') différents sont dosés à l'aide des deux conduits (7, 8), ou plus.

15. Procédé selon la revendication 13,
**caractérisé en ce qu'**au moins deux conduits (7, 8) sont prévus parallèlement, étant précisé que les deux conduits (7, 8), ou plus, présentent des sections transversales de tailles différentes, et **en ce qu'**à l'aide des deux conduits (7, 8), ou plus, un dosage grossier a tout d'abord lieu, et ensuite un dosage fin du produit en poudre (1).

16. Procédé selon la revendication 13,
**caractérisé en ce que** deux raccords à dépression (13, 14) se succèdent dans le conduit (7), dans le sens d'écoulement dans celui-ci, étant précisé qu'une chambre de dosage (16) est formée entre les deux raccords à dépression (13, 14), et **en ce qu'**un dosage du produit en poudre (1) se fait grâce à l'application alternée d'une dépression à l'un des deux raccords à dépression (13, 14).
